(19) Europäisches Patentamt
European Patent Office
Office européen des brevets

(11) EP 2 832 711 A1

(12) EUROPEAN PATENT APPLICATION
published in accordance with Art. 153(4) EPC

(43) Date of publication:
04.02.2015 Bulletin 2015/06

(51) Int Cl.:
C04B 37/00 (2006.01)    B01D 39/20 (2006.01)
B01J 35/04 (2006.01)

(21) Application number: 12872729.4

(22) Date of filing: 29.03.2012

(86) International application number:
PCT/JP2012/058468

(87) International publication number:
WO 2013/145243 (03.10.2013 Gazette 2013/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Ibiden Co., Ltd
Ogaki-shi, Gifu 503-8604 (JP)

(72) Inventors:
• OTA Kohei
Ibi-gun
Gifu 501-0695 (JP)
• SHIMADA Shohei
Ibi-gun
Gifu 501-0695 (JP)

(74) Representative: Hoffmann Eitle
Patent- und Rechtsanwälte PartmbB
Arabellastraße 30
81925 München (DE)

(54) HONEYCOMB STRUCTURE, HONEYCOMB FILTER FOR EXHAUST GAS PURIFICATION, AND EXHAUST GAS PURIFICATION DEVICE

(57) The present invention aims to provide a honeycomb structured body that controls the leakage amount of particulate matter such as soot to be not higher than the regulation value even the honeycomb structured body is used at temperatures higher than 800°C, particularly temperatures not lower than 1200°C. The honeycomb structured body of the present invention includes a plurality of pillar-shaped honeycomb fired bodies bonded with one another by adhesive layers residing therebetween, the plurality of pillar-shaped honeycomb fired bodies each include a large number of cells longitudinally disposed in parallel with one another with a cell wall interposed therebetween, and either one end of the cell wall that surrounds the cells is sealed. The adhesive layers contain at least alumina fibers and inorganic balloons, the alumina fibers have an average length of 25 to 100 μm, and the inorganic balloons have an average particle size of 150 to 250 μm.

FIG.1

**Description**

TECHNICAL FIELD

The present invention relates to a honeycomb structured body, an exhaust gas purifying honeycomb filter, and an exhaust gas purifying device.

BACKGROUND ART

Exhaust gases discharged from internal combustion engines (e.g. diesel engines) contain particulate matter (hereinafter, referred to also as PM) such as soot. In recent years, the PM has been a problem as it is harmful to the environment and the human body. Since exhaust gases also contain harmful gas components such as CO, HC and $NO_x$, the influence of the harmful gas components on the environment and the human body has also been concerned.
Therefore, various honeycomb structured bodies have been developed as exhaust gas purifying devices that are connected to an internal combustion engine to collect PM in exhaust gases and convert the harmful gas components contained in exhaust gases, such as CO, HC and $NO_X$ into non harmful gas. Such honeycomb structured bodies are formed from a porous ceramic material (e.g., cordierite, silicon carbide).
One of those honeycomb structured bodies proposed is a honeycomb structured body that includes a plurality of pillar-shaped porous ceramic honeycomb fired bodies bonded with one another by adhesive layers residing therebetween. The pillar-shaped porous ceramic honeycomb fired bodies each include a large number of cells longitudinally disposed in parallel with one another with a cell wall being interposed therebetween, and either one end of the cell wall surrounding the cell is sealed to allow the honeycomb structured body to function as a filter.
As an example of such conventional honeycomb structured bodies, Patent Literature 1 discloses a honeycomb filter that can have reduced thermal stress, is less likely to have cracks, and is excellent in strength and durability even in local temperature changes caused by local combustion or the like.

CITATION LIST

- Patent Literature

Patent Literature 1: WO 03/067041

SUMMARY OF INVENTION

- Technical Problem

In the honeycomb filter disclosed in Patent Literature 1, adhesive layers, which bond a plurality of honeycomb fired bodies with one another, contain alumina fibers and inorganic balloons and thus are excellent in heat resistance. In addition, since the thermal expansion $\alpha_L$ of the adhesive layers and the thermal expansion $\alpha_F$ of the honeycomb fired bodies are designed to have a relation of $0.01<|\alpha_L-\alpha_F|/\alpha_F<1.0$, the adhesive layers can reduce the thermal stress generated by local temperature changes.
As disclosed in Patent Literature 1, it is well known that adhesive layers containing alumina fibers and inorganic balloons are excellent in heat resistance.
However, the honeycomb filter disclosed in Patent Literature 1 has the following problem. If the honeycomb filter is used at temperatures not lower than 1200°C, the honeycomb fired bodies may have cracks, whereby the amount of particulate matter such as soot leaking outside may exceed the regulation value.
The inventors of the present invention solved the above problem by adjusting the parameters of components of the adhesive layer, namely, the fiber length of the alumina fibers and the particle size of the inorganic balloons.
In other words, the inventors of the present invention found that adjusting the fiber length of the alumina fibers and the particle size of the inorganic balloons enables uniform dispersion of adhesive layer components such as alumina fibers, inorganic balloons, inorganic particles, and an inorganic binder, and formation of dense adhesive layers with no voids. Moreover, the inventors of the present invention found that use of inorganic balloons with a particle size within a predetermined range can reduce the difference in thermal stress between the adhesive layers and the honeycomb fired bodies.
As a result, the inventors of the present invention found that use of a honeycomb structured body with adhesive layers having the above configuration can prevent cracks in the adhesive layers due to thermal stress, prevent cracks in the honeycomb fired bodies accompanied by the cracks in the adhesive layers, and suppress soot leakage, and thus completed the present invention.

- Solution to Problem

Thus, the honeycomb structured body according to claim 1 is a honeycomb structured body including a plurality of pillar-shaped honeycomb fired bodies bonded with one another by adhesive layers residing therebetween, the plurality of pillar-shaped honeycomb fired bodies each including a large number of cells longitudinally disposed in parallel with one another with a cell wall being interposed therebetween, either one end of the cell wall that surrounds the cells being sealed, wherein the adhesive layers contain at least alumina fibers and inorganic balloons, the alumina fibers have an average length of 25 to 100 $\mu$m, and the inorganic balloons have an average particle size of 150 to 250 $\mu$m.

The honeycomb structured body according to claim 1 can suppress cracks in the adhesive layer, thereby suppressing cracks in the honeycomb fired bodies, and thereby suppressing soot leakage of the honeycomb structured body.

The adhesive layers constituting the honeycomb structured body according to claim 1 contain inorganic balloons with an average particle size of 150 to 250 $\mu$m. The inorganic balloons having such a particle size improve the dispersibility of alumina fibers with an average length of 25 to 100 $\mu$m and other adhesive layer components such as inorganic particles and an inorganic binder. The improvement in dispersibility allows the adhesive layers to have a dense structure with a reduced number of voids. As a result, the adhesive layers can have improved mechanical strength and are less likely to have cracks. In addition, finely dispersed inorganic balloons have an effect of suppressing expansion of cracks. Thus, even when the adhesive layers have cracks, expansion of the cracks can be surely suppressed.

Furthermore, adhesive layers containing inorganic balloons have a low thermal capacity, and thus can have a large thermal conductivity and reduce the difference in thermal stress caused by PM combustion between the honeycomb fired bodies and the adhesive layers. As a result, cracks in the adhesive layers due to thermal stress difference can be suppressed, and thereby cracks in the honeycomb fired bodies can be suppressed.

Inorganic balloons with an average particle size of smaller than 150 $\mu$m, which is too small, deteriorate the dispersibility of alumina particles, an inorganic binder, and inorganic particles, tend to cause the adhesive layers to have voids in portions not having inorganic balloons, and are less likely to allow the adhesive layer to have a dense structure, thereby reducing the strength of the adhesive layers. Inorganic balloons with an average particle size of greater than 250 $\mu$m, which is too large for the thickness of the adhesive layer, tend to cause portions with low strength in the adhesive layers.

Alumina fibers with an average length of shorter than 25 $\mu$m, which are too short, tend to coagulate and reduce its dispersibility. Alumina fibers have an effect of suppressing expansion of cracks. However, if alumina fibers have too short a length, the effect of suppressing expansion of cracks is less likely to be achieved. On the other hand, alumina fibers with an average length of longer than 100 $\mu$m, which is too long, tend to be oriented in one certain direction and reduce their dispersibility.

If alumina fibers are used as a material for adhesive layers, they do not cause meltdown or phase transformation until about 1400°C and thus can achieve the above effect even at a temperature not lower than 1200°C.

In the honeycomb structured body according to claim 2, the alumina fibers in the adhesive layers have an aspect ratio (fiber length/fiber diameter) of 3 to 30.

This ratio enables further improvement in mechanical strength of the adhesive layers, and even if the adhesive layers have cracks, expansion of the cracks can be more surely suppressed.

Alumina fibers with an aspect ratio of less than 3 tend to fail to achieve the effect of improving mechanical strength and the effect of suppressing expansion of cracks. Alumina fibers with an aspect ratio of more than 30 tend to cause breakage of alumina fibers during formation of the adhesive layers, and thus tend to fail to achieve the above effect.

In the honeycomb structured body according to claim 3, the adhesive layers further contain inorganic particles and an inorganic binder.

Thereby, the alumina fibers, inorganic balloons, and inorganic particles in the adhesive layers are bonded with the inorganic binder to provide adhesive layers with more excellent mechanical characteristics. Besides, the adhesive layers, which contain inorganic particles, can have a more dense structure and improved mechanical characteristics. Furthermore, the inorganic binder and the inorganic particles partly penetrate the pores in the outer surface of the honeycomb fired bodies to cause an anchor effect, thereby enhancing the bonding strength.

In the honeycomb structured body according to claim 4, the amount of the inorganic balloons is 5.0 to 50.0 vol%.

This can maintain the mechanical characteristics of the honeycomb structured body as a filter.

Inorganic balloons in an amount of less than 5.0 vol%, which is too small an amount, deteriorate the dispersibility of the adhesive layer components, tend to cause voids, and may result in reduction in strength of the adhesive layers. Besides, the thermal capacity of the adhesive layers cannot be reduced, thereby failing to reduce the difference in thermal stress caused by PM combustion between the honeycomb fired bodies and the adhesive layers. As a result, the adhesive layers have cracks, which induces cracks in the honeycomb fired bodies and causes soot leakage. Inorganic balloons in an amount of more than 50.0 vol%, which is too large an amount to the contrary, excessively reduce the amount of other components and tend to cause reduction in strength and expansion of cracks in the adhesive layers.

In the honeycomb structured body according to claim 5, the amount of the alumina fibers in the adhesive layers is 5.0 to 50.0 vol%.

Thereby, the alumina fibers in the adhesive layers can be finely dispersed.

The alumina fibers in an amount of less than 5.0 vol%, which is too small an amount, fail to achieve sufficient effect of reinforcing the adhesive layers by the fibers. Also, the effect of suppressing expansion of cracks is less likely to be achieved. The alumina fibers in an amount of more than 50.0 vol%, which is too large an amount, reduce the dispersibility of the alumina fibers and tend to cause biased mechanical characteristics in the adhesive layer.

In the honeycomb structured body according to claim 6, the inorganic balloons are fly ash balloons.

Fly ash balloons each have a nearly spherical shape and consist of silica and alumina. Accordingly, fly ash balloons will not cause meltdown or the like even when exposed to high temperatures of not lower than 1200°C. Moreover, fly ash balloons, which have a small specific gravity, can reduce the thermal capacity of the adhesive layers. Fly ash balloons, which can reduce the thermal capacity of the adhesive layers as mentioned, can thus reduce the thermal stress difference between the adhesive layers and the honeycomb fired bodies. As a result, cracks in the adhesive layers due to the thermal stress difference, cracks in the honeycomb fired bodies, and soot leakage can be suppressed.

In the honeycomb structured body according to claim 7, the inorganic particles are silicon carbide particles.

Thereby, the resulting adhesive layers are excellent in heat resistance and mechanical characteristics.

In the honeycomb structured body according to claim 8, the inorganic binder is a solidified product of silica sol or alumina sol.

Since silica sol or alumina sol is used as a raw material for forming the inorganic binder, the resulting adhesive layers can have excellent heat resistance.

The exhaust gas purifying honeycomb filter according to claim 9 is disposed in an exhaust passage of an internal combustion engine and is configured to filter particulate matter discharged from the internal combustion engine. The exhaust gas purifying honeycomb filter includes the honeycomb structured body according to any one of claims 1 to 8.

Thereby, even if the exhaust gas purifying honeycomb filter is exposed to high temperatures of higher than 800°C, particularly not lower than 1200°C, the filter is less likely to have cracks. Even if the filter has cracks, expansion of the cracks can be suppressed, whereby the leakage amount of particulate matter such as soot can be controlled to be lower than the regulation value.

The exhaust gas purifying device according to claim 10 includes a casing; an exhaust gas purifying honeycomb filter accommodated in the casing; and a holding sealing material wound around the exhaust gas treating body and disposed between the exhaust gas treating body and the casing,

wherein the exhaust gas purifying honeycomb filter includes the exhaust gas purifying honeycomb filter according to claim 9.

Thereby, even if the exhaust gas purifying device is exposed to high temperatures of higher than 800°C, particularly not lower than 1200°C, the adhesive layers are less likely to have cracks. Even in the case where the adhesive layers have cracks, the expansion of the cracks can be suppressed, whereby the leakage amount of particulate matter such as soot can be controlled to be lower than the regulation value.

BRIEF DESCRIPTION OF DRAWINGS

Fig. 1 is a schematic perspective view illustrating an example of the honeycomb structured body of the present invention.

Fig. 2(a) is a schematic perspective view illustrating an example of a honeycomb fired body that constitutes the honeycomb structured body of the present invention. Fig. 2 (b) is an A-A line cross-sectional view of the honeycomb fired body illustrated in Fig. 2(a).

Fig. 3 is a cross-sectional view illustrating a process of forming an aggregate of honeycomb fired bodies using an adhesive paste.

Fig. 4 is a schematic cross-sectional view illustrating an example of the exhaust gas purifying device according to the first embodiment of the present invention.

Fig. 5 is a schematic explanatory view showing the method for testing the bending strength of the adhesive layer of each honeycomb structured body (honeycomb filter) according to the example and the comparative examples.

Fig. 6 is a graph showing the bending strengths of the adhesive layers that constitute the honeycomb structured bodies according to Example 1, Comparative Example 1, and Comparative Example 2.

Fig. 7 is a scanning electron microscope (SEM) photograph showing a face, which is perpendicular to the longitudinal direction of the honeycomb fired bodies, of an adhesive layer before breakage in Example 1.

Fig. 8 is a scanning electron microscope (SEM) photograph showing a face, which is perpendicular to the longitudinal direction of the honeycomb fired bodies, of an adhesive layer before breakage in Comparative Example 1.

DESCRIPTION OF EMBODIMENTS

(First embodiment)

In the following, a first embodiment which is an embodiment of the honeycomb structured body of the present invention is described referring to the figures.

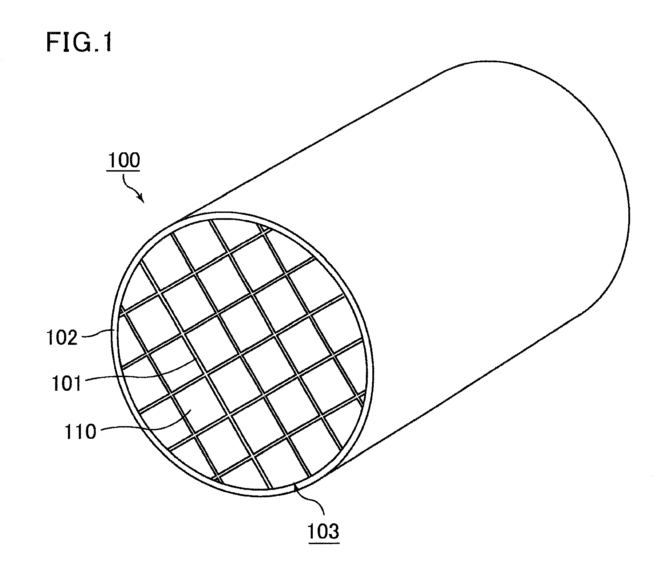

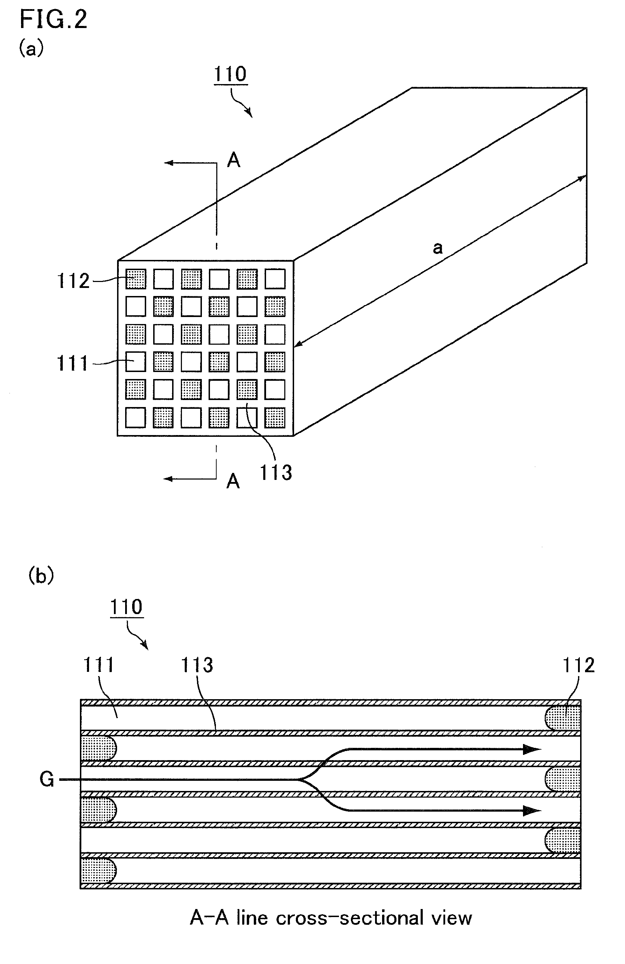

Fig. 1 is a schematic perspective view illustrating an example of the honeycomb structured body according to a first embodiment of the present invention. Fig. 2 (a) is a schematic perspective view illustrating an example of a honeycomb fired body that constitutes the honeycomb structured body of the present invention. Fig. 2(b) is an A-A line cross-sectional view of the honeycomb fired body illustrated in Fig. 2(a).

In a honeycomb structured body 100 illustrated in Fig. 1, a plurality of honeycomb fired bodies 110 having a configuration shown in Fig. 2 (a) and Fig. 2 (b) are bonded with one another by an adhesive layers 101 residing therebetween to form a ceramic block 103. The ceramic block 103 further includes a coat layer 102 formed on its periphery.

The honeycomb fired body 110 illustrated in Fig. 2 (a) and Fig. 2(b) has a large number of cells 111 longitudinally (in the direction shown by "a" in Fig. 2(a)) disposed in parallel with one another with a cell wall 113 being interposed therebetween. Either one end of each of the cells 111 is sealed with a plug 112. Therefore, exhaust gas G flowed into one of the cells 111 that is open at one end surely passes through the cell wall 113 that defines the cells 111 and then flows out from other cells 111 that are open at the other end.

Thus, the cell wall 113 functions as a filter for collecting matters such as PM.

Next, adhesive layers 101 constituting the honeycomb structured body 100 of the first embodiment of the present invention will be described.

In the honeycomb structured body 100 of the present embodiment, the adhesive layers 101, which make the honeycomb fired bodies 110 be bonded with one another, contain at least alumina fibers and inorganic balloons.

The lower limit of the average length of the alumina fibers is preferably 25 $\mu$m, more preferably 40 $\mu$m. The upper limit of the average length of the alumina fibers is preferably 100 $\mu$m, more preferably 60 $\mu$m.

Alumina fibers with an average length of shorter than 25 $\mu$m, which are too short, tend to coagulate and have reduced dispersibility. Alumina fibers have an effect of suppressing expansion of cracks. However, alumina fibers with too short a length are less likely to achieve the effect of suppressing the expansion of cracks. Alumina fibers with an average length of longer than 100 $\mu$m, which are too long, tend to be oriented in one certain direction and have reduced dispersibility.

The aspect ratio (fiber length/fiber diameter) of the alumina fibers is preferably 3 to 30. The alumina fibers having such an aspect ratio can further improve the mechanical strength of the resulting adhesive layer, and can more surely suppress the expansion of cracks even if the adhesive layers have cracks.

Alumina fibers with an aspect ratio of less than 3 are less likely to achieve an effect of improving the mechanical strength and an effect of suppressing the expansion of cracks. Alumina fibers with an aspect ratio of more than 30 tend to be broken in the formation of the adhesive layers and are less likely to achieve the above effects.

The alumina fibers may contain alumina ($Al_2O_3$) only, or may contain silica ($SiO_2$) in addition to alumina.

Specifically, the composition of the alumina fibers is preferably $Al_2O_3$:$SiO_2$ = 65 : 35 to 99:1, more preferably $Al_2O_3$:$SiO_2$ = 70:30 to 99:1, still more preferably $Al_2O_3$:$SiO_2$ = 72:28 to 98:2, based on weight ratio.

The inorganic balloons are not particularly limited and examples thereof include alumina balloons, glass microballoons, shirasu balloons, fly ash balloons (FA balloons), and mullite balloons. Fly ash balloons are preferred among these.

The lower limit of the average particle size of the inorganic balloons is preferably 150 $\mu$m, more preferably 160 $\mu$m. The upper limit of the average particle size of the inorganic balloons is preferably 250 $\mu$m, more preferably 200 $\mu$m.

Inorganic balloons typically have a spherical shape, and thus the average particle size thereof is the average diameter of spherical particles.

Inorganic balloons with an average particle size of smaller than 150 $\mu$m, which are too small, deteriorate dispersibility of the alumina particles, inorganic binder, and inorganic particles, tend to cause the adhesive layers to have voids at portions not having the inorganic balloons, are less likely to achieve a dense structure, and thus lower the strength. Inorganic balloons with an average particle size of greater than 250 $\mu$m, which are too large for the adhesive layer, tend to cause the adhesive layers to have portions with low strength.

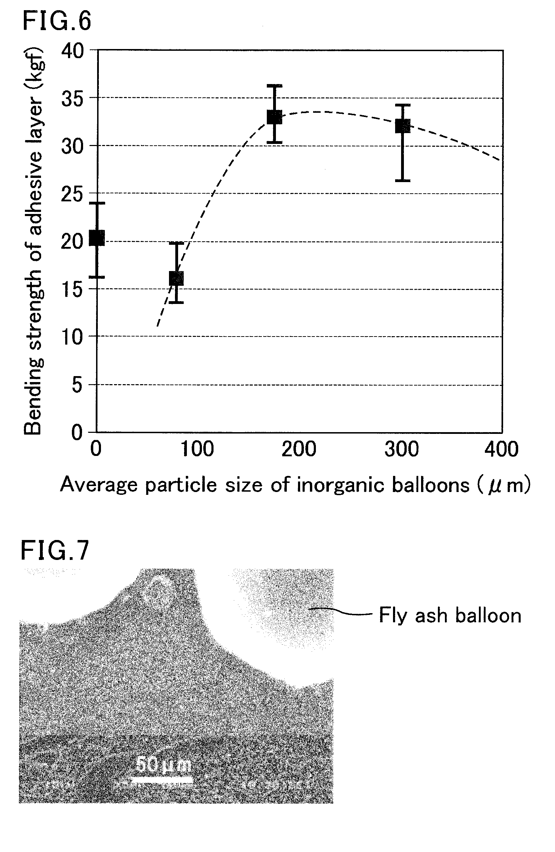

Fig. 6 is a graph which shows the bending strength of the adhesive layer constituting the honeycomb structured bodies of Example 1, Comparative Example 1, and Comparative Example 2, and which indicates that the bending strength of the adhesive layer reaches the maximum value in a range from 150 to 250 $\mu$m of the average particle size of the inorganic balloons.

The adhesive layers may further include inorganic particles and an inorganic binder.

Examples of the inorganic particles include ceramic particles including nitride ceramics such as aluminum nitride, silicon nitride, boron nitride, and titanium nitride; and carbide ceramics such as silicon carbide, zirconium carbide, titanium carbide, tantalum carbide, and tungsten carbide. These may be used alone or in combination of two or more thereof. Among the inorganic particles, silicon carbide particles are preferred because of their excellent thermal conductivity.

The lower limit of the average particle size of the inorganic particles is preferably 0.01 $\mu$m, more preferably 0.1 $\mu$m. The upper limit of the average particle size of the inorganic particles is preferably 100 $\mu$m, more preferably 15 $\mu$m, still more preferably 10 $\mu$m. Inorganic particles with a particle size of smaller than 0.01 $\mu$m may increase the cost, while inorganic particles with a particle size of greater than 100 $\mu$m may deteriorate the filling rate and lower the bonding strength and the thermal conductivity.

Examples of the inorganic binder include solidified products of silica sol, alumina sol, and titania sol. These may be used alone or in combination of two or more kinds thereof. The inorganic binder is solidified silica, alumina, or titania, which is generated from a fine oxide suspended in an aqueous solution when the adhesive layers are dried or fired, and has a function of bonding the alumina fibers, inorganic balloons, inorganic particles and the like included in the adhesive layer. The inorganic binder also has a function of bonding adhesive layers to the honeycomb fired bodies. Among the inorganic binders, a solidified product of silica sol or alumina sol is preferred.

The solidified product refers to silica, alumina, titania or the like which contains little water and may be formed by forming an adhesive paste layer and then drying the adhesive paste layer or heating the adhesive layers at a temperature higher than the temperature for drying. Such a solidified product may contain OH group(s), crystal water or the like.

The lower limit of the amount of the alumina fibers included in the adhesive layers 101 is preferably 5. 0 vol%, more preferably 10 vol%, based on solids content. The upper limit of the amount of the alumina fibers is preferably 50 vol%, more preferably 30 vol%, based on solids content.

The inorganic fibers in an amount of less than 5.0 vol%, which is too small an amount, reduce the reinforcing effect of the adhesive layers by the fibers. In addition, the effect of suppressing expansion of cracks is less likely to be achieved. The alumina fibers in an amount of more than 50 vol%, which is too large an amount, reduce the dispersibility of the alumina fibers and tend to cause biased mechanical characteristics in the adhesive layers.

The lower limit of the shot content of the alumina fibers is preferably 1 vol%. The upper limit thereof is preferably 10 vol%, more preferably 5 vol%, still more preferably 3 vol%.

A shot content of 1 vol% is difficult to achieve due to manufacturing reasons. A shot content of more than 10 vol% may damage the wall surface of a porous ceramic member 20. The shot content in the alumina fibers means a weight percentage of the shot (non-fibrous particles), which cannot become fiber and remains as particles, in the alumina fibers.

The lower limit of the amount of the inorganic balloons contained in the adhesive layers 101 is preferably 5.0 vol%, more preferably 10 vol%, based on solids content. The upper limit of the amount of the inorganic balloons is preferably 50. 0 vol%, more preferably 30 vol%, based on solids content. The inorganic balloons in an amount of less than 5.0 vol%, which is too small an amount, deteriorate the dispersibility of the adhesive layer components, tend to cause voids, and may reduce the strength of the adhesive layers. In addition, since the thermal capacity of the adhesive layers cannot be reduced, the thermal stress difference caused by PM combustion between the honeycomb fired bodies and the adhesive layers cannot be reduced. Thereby, the adhesive layers have cracks, which induce cracks in the honeycomb fired bodies, and then results in soot leakage. The inorganic balloons in an amount of more than 50.0 vol%, which is too large an amount to the contrary, reduce the amounts of other components, and thus tend to cause reduction in strength and expansion of cracks.

The lower limit of the amount of the inorganic particles contained in the adhesive layers 101 is preferably 3 vol%, more preferably 10 vol%, still more preferably 20 vol%, based on solids content. The upper limit of the amount of the inorganic particles is preferably 80 vol%, more preferably 60 vol%, still more preferably 40 vol%, based on solids content. The inorganic particles in an amount of less than 3 vol% may reduce the thermal conductivity. The inorganic particles in an amount of more than 80 vol% may reduce the bonding strength when the adhesive layers 101 are exposed to high temperatures.

The lower limit of the amount of the inorganic binder contained in the adhesive layers 101 is preferably 1 vol%, more preferably 5 vol%. The upper limit of the amount of the inorganic binder is preferably 30 vol%, more preferably 15 vol%, still more preferably 9 vol%. The inorganic binder in an amount of less than 1 vol% may reduce the bonding strength, while the inorganic binder in an amount of more than 30 vol% may reduce the thermal conductivity.

The thickness of the adhesive layers 101 is preferably 0.3 to 3.0 mm.

Next, a honeycomb fired body 110 constituting the honeycomb structured body 100 according to the first embodiment of the present invention will be described.

Materials of the honeycomb fired body 110 is not particularly limited, and examples thereof include nitride ceramics such as aluminum nitride, silicon nitride, boron nitride, and titanium nitride; and carbide ceramics such as silicon carbide, zirconium carbide, titanium carbide, tantalum carbide, and tungsten carbide. Among these, silicon carbide is preferred because of its high heat resistance, excellent mechanical characteristics, and high thermal conductivity. The honeycomb fired body 110 may be a honeycomb fired body which contains 60 weight% or more of silicon carbide and 40 weight% or less of metal silicon and in which silicon carbide particles are bonded with the metal silicon or the like, or may be a honeycomb fired body consisting of almost silicon carbide only.

In the honeycomb fired body 110, a large number of the above ceramic particles as aggregates may be bonded with one another with a large number of pores residing therebetween, or a plurality of ceramic particles each containing pores inside may be bonded with one another.

The porosity of the honeycomb fired body 110 is not particularly limited and is preferably about 40 to 70 vol%. A porosity of less than 40 vol% tends to cause the honeycomb structured body 100 to have clogging. A porosity of more than 70 vol% tends to reduce the strength of the honeycomb fired body 110 and thereby cause breakage of the honeycomb fired body 110. The porosity may be measured by mercury intrusion technique, for example.

The average pore diameter of the honeycomb fired body 110 is preferably 5 to 100 $\mu$m. An average pore diameter of smaller than 5 $\mu$m tends to cause particulate matter to easily cause clogging. An average pore diameter of greater than 100 $\mu$m tends to cause particulate matter to pass through the pore, which reduces the capability of collecting particulate matter, and thus deteriorates the function as a filter.

The thickness of the cell wall 113 of the honeycomb fired body 110 of the present invention is not particularly limited, and is preferably 0.1 to 0.4 mm.

The cell wall 113 of the honeycomb fired body 110 with a thickness of less than 0.1 mm, which is too thin for a cell wall supporting the honeycomb structure, may fail to hold the strength of the honeycomb fired body 110. The cell wall 113 of the honeycomb fired body 110 with a thickness of more than 0.4 mm may increase the pressure loss of the honeycomb structured body 100.

The thickness of an outer wall (external wall) 102 of the honeycomb fired body 110 that constitutes the honeycomb structured body 100 of the present invention is not particularly limited, and is preferably 0.1 to 0.4 mm, which is the same as the thickness of the cell wall 113 of the honeycomb fired body 110.

The cell density (number of cells per unit area) in a cross section perpendicular to the longitudinal direction of the honeycomb fired body 110 is not particularly limited. A preferable lower limit thereof is 31.0 pcs/cm$^2$ (200 pcs/inch$^2$), a preferable upper limit thereof is preferably 93. 0 pcs/cm$^2$ (600 pcs/inch$^2$), a more preferable lower limit is 38.8 pcs/cm$^2$ (250 pcs/inch$^2$), and a more preferable upper limit is 77.5 pcs/cm$^2$ (500 pcs/inch$^2$).

In the honeycomb structured body 100 according to the first embodiment of the present invention, the adhesive layers 101 having the above configuration penetrate the honeycomb fired bodies 110 at the interfaces of the honeycomb fired bodies 110, the adhesive layers 101 and the honeycomb fired body 110 are firmly bonded with the inorganic binder or the like, and the coat layer 102 is formed on the periphery.

The coat layer 102 may be made of the same materials and the same weight percentage thereof as those of the adhesive layers 101. The thickness of the coat layer 102 is preferably 0.1 to 3 mm.

If the honeycomb structured body 100 does not have grooves exposed at the side face and is formed by combining multiple kinds of honeycomb fired bodies each having an outer wall on an entire side face, a coat layer is not necessary.

Next, the method for manufacturing the honeycomb structured body according to the first embodiment of the present invention will be described.

In the following description, an example where the ceramic constituting the honeycomb fired bodies contains silicon carbide will be described. However, the material of the honeycomb fired bodies is not limited to silicon carbide.

(1) In the method for manufacturing a honeycomb structured body according to the present embodiment, first, a molding process is performed by extrusion molding a wet mixture of ceramic powder and a binder to form a honeycomb molded body. Specifically, first, a wet mixture for manufacturing a honeycomb molded body is prepared by mixing silicon carbide powder with different average particle sizes as ceramic powder, an organic binder, a liquid plasticizer, a lubricant, and water. Subsequently, the wet mixture is charged into an extrusion molding machine and then extrusion molded to form a honeycomb molded body with a predetermined shape.

(2) The honeycomb molded body is cut into a predetermined length and is dried using a dryer such as a microwave drying machine, a hot air drying machine, a dielectric dryer, a low pressure dryer, a vacuum dryer, or a freeze dryer, and then a sealing process is performed in which predetermined ends of the cells are filled with a plug paste for a plug to seal the cells. The plug paste may be the above mentioned ceramic materials (wet mixture).

The conditions for the cutting process, the drying process and the sealing process may be conditions conventionally adopted for manufacturing a honeycomb fired body.

(3) A degreasing process is performed in which organic substances in the honeycomb molded body are heated in a degreasing furnace, and the resulting honeycomb molded body is conveyed to a firing furnace. Then, a firing process is performed to manufacture a honeycomb fired body. The conditions for the degreasing process and the firing process may be conditions conventionally adopted for manufacturing a honeycomb fired body. For example, in the degreasing process, the honeycomb molded body may be heated at 300°C to 650°C under an oxygen-containing atmosphere. In the firing process, the honeycomb molded body may be heated at 2000°C to 2200°C under a non-oxidizing atmosphere to sinter silicon carbide particles in the honeycomb molded body.

Through these processes, a honeycomb fired body with a predetermined shape can be manufactured.

(4) An adhesive paste layer is formed on the side face of the honeycomb fired body using the adhesive paste.

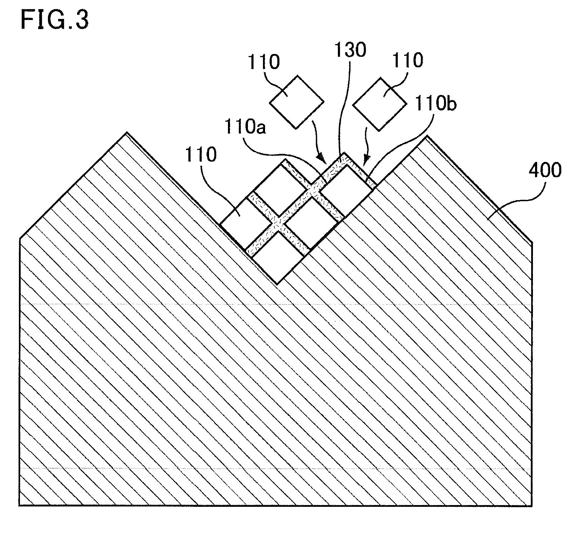

Fig. 3 is a cross-sectional view illustrating a process of forming an aggregate of honeycomb fired bodies using the adhesive paste.

The method for forming the adhesive paste layer is not particularly limited. For example, as shown in Fig. 3, a support 400 having a V-shape cross section is prepared, and one honeycomb fired body 110 (ref. Fig. 2) is placed on the support along the V-shape. The adhesive paste is applied to two up-facing side faces (110a and 110b) of the honeycomb fired body 110 using a squeegee or the like, to form an adhesive paste layer 130 with a predetermined thickness.

Next, another honeycomb fired body 110 is placed on the adhesive paste layer 130. Then, the adhesive paste is further applied to the up-facing side faces of the another honeycomb fired body 110 to form an adhesive paste layer 130, and the process of placing still another honeycomb fired body 110 on the adhesive paste layer 130 is repeated, to form a honeycomb aggregate body which includes a predetermined number of the honeycomb fired bodies with the adhesive paste layers inserted therebetween.

The adhesive paste preferably contains at least alumina fibers, inorganic balloons, and an inorganic binder (e.g. silica sol), and more preferably further contains inorganic particles. The alumina fibers, inorganic balloons, inorganic binder (e.g. silica sol), and inorganic particles may be the same as those described for the honeycomb structured body according to the present embodiment.

Concerning the percentages of the components, if the alumina fibers, inorganic balloons, and inorganic binder are included as main components, the preferred range of each component forming the adhesive paste is as follows. That is, when the adhesive paste is applied to side faces of the honeycomb fired bodies to bond the honeycomb fired bodies and then the honeycomb fired bodies are degreased at 700°C, the solid content concentration of each component is preferably: alumina fibers: 5 to 15 vol%, inorganic balloons: 35 to 45 vol%, and inorganic binder: 10 to 15 vol%.

If the inorganic particles are further added to the above components, the amount of the inorganic particles after degreasing is preferably in a range of 30 to 40 vol%.

The adhesive paste may contain an organic binder. However, if the adhesive paste containing an organic binder is used for an exhaust gas filter for a vehicle, the adhesive layers are exposed to high temperatures and thus tend to cause degradative loss, which can be a cause of fluctuations in the bonding strength. Thus, the amount of the organic binder is preferred to be as small as possible.

Examples of the organic binder include polyvinylalcohol, methylcellulose, ethylcellulose, and carboxymethylcellulose. These may be used alone or in combination of two or more thereof. Among these organic binders, carboxymethylcellulose is preferred.

The lower limit of the amount of the organic binder in the adhesive paste is preferably 0.1 vol%, more preferably 0.2 vol%, still more preferably 0.4 vol%, based on solids content. The upper limit of the amount of the organic binder is preferably 5.0 vol%, more preferably 1.0 vol%, still more preferably 0.6 vol%, based on solids content. The organic binder in an amount of less than 0.1 vol% makes it difficult to suppress the migration of the adhesive layers 101, while the organic binder in an amount of more than 5.0 vol% causes burning out of the organic binder when the adhesive layers 101 are exposed to high temperatures, easily resulting in reduction in bonding strength.

When the adhesive paste is prepared, a dispersion solution may be used. Examples of the dispersion solution include water, organic solvents such as acetone, and alcohols such as methanol.

After the raw materials are mixed, the viscosity of the adhesive paste is adjusted by adding a dispersion solution or the like such that the resulting adhesive paste has a constant viscosity before use. The viscosity of the adhesive paste is preferably 15 to 25 Pa·s (10,000 to 20,000 cps (cP)).

In the above bonding process, the adhesive paste is applied to predetermined side faces of a honeycomb fired body, in which a predetermined end of each cell is sealed, to form an adhesive paste layer, and then the process of stacking another honeycomb fired body on the adhesive paste layer is repeated in series to form a honeycomb block. Alternatively, a honeycomb block may be formed in the following process.

That is, both ends of a predetermined number of honeycomb fired bodies having various shapes are supported and fixed at a predetermined position to form an aggregate body with a predetermined shape such as a round pillar shape, in which the honeycomb fired bodies are combined with predetermined intervals. The aggregate body is preferably accommodated in a case with a predetermined shape, and the case with a predetermined shape preferably has substantially the same capacity and shape as those of the aggregate body.

Next, the adhesive paste is poured into the space formed between the honeycomb fired bodies from an inlet formed on the case, to form adhesive paste layers between the honeycomb fired bodies. The resulting product is then dried and cured to manufacture an aggregate of honeycomb fired bodies which has a large rectangular pillar shape and adhesive layers.

(5) Through the above bonding process, an aggregate of honeycomb fired bodies with a large rectangular pillar shape is formed. Then, a cutting process is performed using a cutter such as a diamond cutter to obtain a honeycomb block with a round pillar or cylindroid shape. Finally, a coat layer forming process, in which a coating agent paste is applied to the periphery of the honeycomb block and then dried and cured to form a coat layer, is performed. The coating agent paste may be the same as or different from the above adhesive paste. Through the above processes, the honeycomb structured body of the present embodiment may be manufactured.

In the above mentioned method for manufacturing a honeycomb structured body, the bonding process is performed to form an aggregate of honeycomb fired bodies with a large rectangular pillar shape. Alternatively, a honeycomb block with a predetermined shape such as a round pillar shape may be formed by bonding honeycomb fired bodies, which have various shapes and an outer wall on their side faces, with an adhesive, and then a coat layer may be formed on the periphery. Here, the coat layer is not necessarily required and may be formed only if needed. If the coat layer is formed, the adhesive paste and the coating agent paste may be dried and solidified at the same time.

Next, the exhaust gas purifying device according to the first embodiment of the present invention will be described.

The exhaust gas purifying device according to the first embodiment of the present invention includes the above honeycomb structured body according to the first embodiment of the present invention.

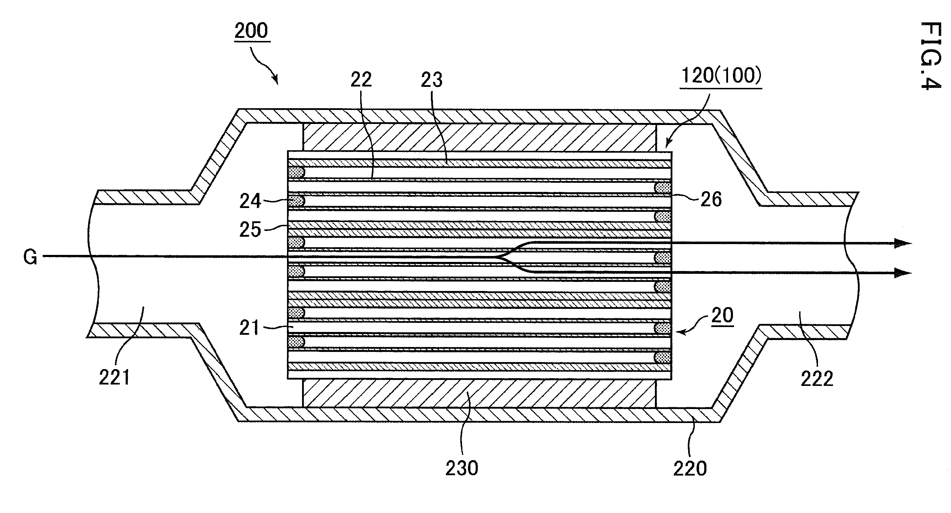

Fig. 4 is a schematic cross-sectional view illustrating an example of the exhaust gas purifying device according to the first embodiment of the present invention.

An exhaust gas purifying device 200 shown in Fig. 4 includes a metal casing 220 provided with a gas inlet side 221 and a gas outlet side 222; and a honeycomb filter 120 accommodated in the metal casing 220.

The exhaust gas purifying device 200 shown in Fig. 4 includes a honeycomb filter 120 that has the same configuration to the honeycomb structured body 100 shown in Fig. 1.

Similar to the configuration of the honeycomb fired body 110 shown in Fig. 2(a) and Fig. 2(b), either one end of each cell 21 of a honeycomb fired body 20 constituting the honeycomb filter 120 is sealed with a plug 24.

A holding sealing material 230 is disposed between the honeycomb filter 120 and the metal casing 220, whereby the holding sealing material 230 supports the honeycomb filter 120.

The holding sealing material 230 is wound entirely around the honeycomb filter 120.

The holding sealing material is made of a mat-like material that mainly contains inorganic fibers such as alumina and has a substantially rectangular shape in a plane view.

At the gas inlet side 221 of the metal casing 220, an inlet pipe is disposed for introducing exhaust gas discharged from an internal combustion engine such as a diesel engine into the exhaust gas purifying device 200. At the gas outlet side 222 of the metal casing 220, an outlet pipe is disposed for discharging the exhaust gas which has passed through the exhaust gas purifying device 200.

A method for purifying exhaust gas according to the first embodiment of the present invention using the exhaust gas purifying device 200 that includes the honeycomb filter 120 will be described referring to Fig. 4.

As shown in Fig. 4, exhaust gas discharged from the internal combustion engine (in Fig. 4, exhaust gas is indicated by G and flow of exhaust gas is indicated by the arrows) flows through the gas inlet side 221 of the metal casing 220 into the exhaust gas purifying device 200. Subsequently, the exhaust gas G flows from one end 25 of the honeycomb fired body 20 into the honeycomb filter 120. Specifically, exhaust gas G flows into a cell 21 that is open at one end 25 of the honeycomb fired body 20.

The exhaust gas G passes through a cell wall 22 that defines the cells 21. At this time, PM in the exhaust gas G is collected at the cell wall 22 and thereby exhaust gas G is purified.

The purified exhaust gas G flows into another cell 21 that is open at the other end 26 of the honeycomb fired body 20 and then is discharged from the honeycomb filter 120. Then, the exhaust gas G is discharged from the gas outlet side 222 of the metal casing 220 to outside of the exhaust gas purifying device 200.

When PM containing soot is collected by the above method, PM accumulates on the cell wall 22 of the honeycomb filter 120 and the pressure loss increases. Thus, when a predetermined amount of PM accumulates, a regenerating process is required in which soot contained in PM is combusted and thereby removed.

In a vehicle with a diesel engine, a common-rail diesel engine is often mounted. In such a case, the engine may be operated at full load to increase the temperature of exhaust gas, and thereby the soot contained in PM accumulating in the honeycomb filter can be forcedly combusted.

Here, the honeycomb filter is generally heated to about 800°C. However, if the regenerating process is not timely performed and the amount of accumulating soot is larger than usual, in other words, if the regenerating process is performed under the state of excessive collecting, the temperature of the honeycomb filter may be increased to not lower than 1200°C.

The honeycomb filter of the present embodiment, which includes the honeycomb structured body according to claim 1, is less likely to have cracks even when the temperature of the honeycomb filter reaches a temperature not lower than 1200°C. Even if the honeycomb filter has cracks, the cracks in the honeycomb filter do not expand entirely, and thus the leakage amount of particulate matter such as soot can be controlled to be not higher than the regulation value.

In the exhaust gas purifying device according to the first embodiment of the present invention, a metal casing may accommodate only a honeycomb filter according to the first embodiment of the present invention, or the honeycomb filter along with a honeycomb structured body to be used as a catalyst support.

In the following, the method for manufacturing an exhaust gas purifying device according to the first embodiment of the present invention will be described.

A honeycomb filter which is according to the first embodiment of the present invention and is manufactured by the above method is placed in a metal casing. Specifically, a mat, which is mainly made of inorganic fibers and has a substantially rectangular shape in a plane view, as a holding sealing material is prepared and wound around the honeycomb filter. Then the honeycomb filter around which the mat is wound is stuffed into a metal casing having a substantially cylinder shape to provide an exhaust gas purifying device.

Alternatively, the metal casing may be prepared as separable parts consisting of a first metal casing and a second metal casing. A honeycomb filter around which a mat made of inorganic fibers is wound is placed in the first metal casing and then covered with the second metal casing, and then the casings are sealed to provide an exhaust gas purifying device.

In the following, function effects of the honeycomb structured body and the method for manufacturing a honeycomb structured body of the present embodiment will be listed.

(1) The adhesive layers constituting the honeycomb structured body of the present embodiment contain inorganic balloons with an average particle size of 150 to 250 $\mu$m. Inorganic balloons with such an average size can improve the dispersibility of alumina fibers with an average length of 25 to 100 $\mu$m and other adhesive layer components, such as inorganic particles and an inorganic binder. Improvement in dispersibility enables the resulting adhesive layers to have reduced voids and a dense structure. As a result, the adhesive layers can have improved mechanical strength and are less likely to have cracks. Furthermore, finely dispersed inorganic balloons have an effect of suppressing expansion of cracks. Thus, even if the adhesive layers have cracks, expansion of the cracks can be surely suppressed.

Moreover, adhesive layers containing inorganic balloons have a low thermal capacity and thus can have increased thermal conductivity. Accordingly, the thermal stress difference caused by PM combustion between the honeycomb fired bodies and the adhesive layers can be reduced. As a result, cracks in the adhesive layers due to the thermal stress difference can be suppressed, and thereby cracks in the honeycomb fired bodies may be suppressed.

(2) Alumina fibers, if used as a material of the adhesive layer, do not cause meltdown or phase transformation until about 1400°C, and can achieve the above effects even at high temperatures of not lower than 1200°C.

(3) The aspect ratio (fiber length/fiber diameter) of the alumina fibers in the adhesive layers constituting the honeycomb structured body of the present embodiment is 3 to 30. Thus, the mechanical strength of the adhesive layers is further improved, and even if the adhesive layers have cracks, the expansion of cracks can be more surely suppressed.

(4) The adhesive layers constituting the honeycomb structured body of the present embodiment further include inorganic particles and an inorganic binder. Thus, the alumina fibers, inorganic balloons, and inorganic particles in the adhesive layers are bonded one another by the inorganic binder to provide adhesive layers more excellent in mechanical characteristics. In addition, the adhesive layer, which contains inorganic particles, can be more dense adhesive layers and have improved mechanical characteristics. Furthermore, part of the inorganic binder and inorganic particles penetrate the pores on the outer surface of the honeycomb fired bodies to achieve anchor effect and thereby improving the bonding strength.

(5) The amount of the inorganic balloons in the adhesive layers constituting the honeycomb structured body of the present embodiment is 5.0 to 50.0 vol%. Thus, mechanical characteristics as a filter can be maintained.

(6) The amount of the alumina fibers in the adhesive layers constituting the honeycomb structured body of the present embodiment is 5.0 to 50.0 vol%. Thus, the alumina fibers in the adhesive layers can be finely dispersed.

(7) The adhesive layers constituting the honeycomb structured body of the present embodiment may include fly ash balloons as inorganic balloons. Fly ash balloons, which have nearly spherical shapes and are made of silica and alumina, will not cause meltdown even if they are exposed to high temperatures of not lower than 1200°C. Furthermore, fly ash balloons have a small specific gravity, and thus can reduce the thermal capacity of the adhesive layer. Thus, fly ash balloons can reduce the thermal capacity of the adhesive layers and thus can reduce the thermal stress difference between the adhesive layers and the honeycomb fired bodies.

(8) The adhesive layers constituting the honeycomb structured body of the present embodiment may include silicon carbide particles as inorganic particles. Adhesive layers including silicon carbide can serve as adhesive layers excellent in heat resistance and mechanical characteristics.

(9) The adhesive layers constituting the honeycomb structured body of the present embodiment may include a solidified product of silica sol or alumina sol, as an inorganic binder. Use of a solidified product of silica sol or alumina sol as an inorganic binder provides adhesive layers excellent in heat resistance.

(10) In the honeycomb filter of the present embodiment, even if the temperature of the honeycomb filter reaches a temperature not lower than 1200°C due to the reasons such as performing a regenerating process under a state of excessive collecting, cracks do not expand entirely, and the leakage amount of particulate matter such as soot can be controlled to be not higher than the regulation value.

EXAMPLES

(Example 1)

Following describes examples in which the first embodiment of the present invention is more specifically described. It should be noted that the present invention is not limited to this example.

(Honeycomb fired body preparation process)

Coarse powder of silicon carbide (average particle size: 22 $\mu$m, 52.8 weight%) and fine powder of silicon carbide (average particle size: 0.5 $\mu$m, 22.6 weight%) were dry blended. To the mixture were added an acrylic resin (2.1 weight%), an organic binder (methylcellulose, 4.6 weight%), a lubricant (Unilube, manufactured by NOF Corporation, 2.8 weight%), glycerin (1.3 weight%) and water (13.8 weight%). The mixture was kneaded to give a mixed composition, and the composition was subjected to an extrusion molding process by which the composition was extrusion molded. Thereby, a raw honeycomb molded body, which had substantially the same shape as that shown in Fig. 2 (a) and had non-sealed cells, was prepared.

Next, the raw honeycomb molded body was dried using a microwave drying machine to give a dry honeycomb molded body. Then, a paste having the same composition as that of the above raw honeycomb molded body was stuffed in predetermined cells and dried using the drying machine.

The dry honeycomb molded body was subjected to a degreasing process in which the dry honeycomb molded body was degreased at 400°C, and then subjected to a firing process under an argon atmosphere at 2200°C and ordinary pressure for three hours, whereby a honeycomb fired body (porosity: 42%, average pore diameter: 9 $\mu$m, size: 34.3 mm $\times$ 34.3 mm $\times$ 150.5 mm, number of cells (cell density) : 300 pcs/inch$^2$, thickness of cell wall: 0.35 mm) made of a silicon carbide sintered body was manufactured.

(Preparation of adhesive paste)

An adhesive paste was prepared by mixing and kneading alumina fibers (mullite fibers consisting of $SiO_2$: 20 weight%, $Al_2O_3$: 80 weight%, average fiber length: 60 $\mu$m), fly ash balloons (average particle size: 175 $\mu$m), silicon carbide particles (average particle size: 0.5 $\mu$m), silica sol (solid content concentration: 30 weight%), carboxymethylcellulose, polyvinylalcohol, and water.

(Bonding process)

A support 400 having a V-shaped cross section as shown in Fig. 3 was prepared. The honeycomb fired body was placed on the support 400 along the V-shape. The adhesive paste with the above composition was applied to up-facing side faces of the honeycomb fired body 110 using a squeegee, to form an adhesive paste layer. Subsequently, the process of stacking another honeycomb fired body 110 on the adhesive paste layer was repeated in series to form an object including 16 honeycomb fired bodies 110 bonded with the adhesive paste layers residing therebetween. The adhesive paste layer was dried and solidified at 180°C for 20 minutes. Thus, a honeycomb aggregate body having a rectangular pillar shape and 1-mm-thick adhesive layers 101 was prepared.

(Periphery processing process and coat layer forming process)

Next, the periphery of the ceramic block was ground with a diamond cutter to have a round pillar shape, thereby forming a ceramic block 103.

Subsequently, a coating agent paste having the same materials as those for the adhesive paste was formed into a 0.2-mm-thick coating agent paste layer on the periphery of the ceramic block. Then, the coating agent paste layer was dried at 120°C to manufacture a honeycomb structured body (honeycomb filter) which had a round pillar shape (diameter: 143.8 mm × length: 150.5 mm) and a coat layer 102 on the periphery. Table 1 shows the characteristics of the components in the adhesive layers constituting the manufactured honeycomb structured body and the composition of the adhesive layer.

(Comparative Examples 1 and 2)

In Comparative Examples 1 and 2, honeycomb structured bodies (honeycomb filters) were manufactured in the same manner as in Example 1, except that the characteristics and composition of the components in the adhesive layers were changed according to the values shown in Table 1. Specifically, the average particle size of fly ash balloons was changed to 80 μm in Comparative Example 1, and the average particle size of fly ash balloons was changed to 300 μm in Comparative Example 2. Table 1 shows the characteristics of the components in the adhesive layers constituting the manufactured honeycomb structured bodies and the composition of the adhesive layers.

Evaluation of honeycomb structured body (honeycomb filter)

(1) Measurement of the bending strength of an adhesive layer of a sample containing the adhesive layer

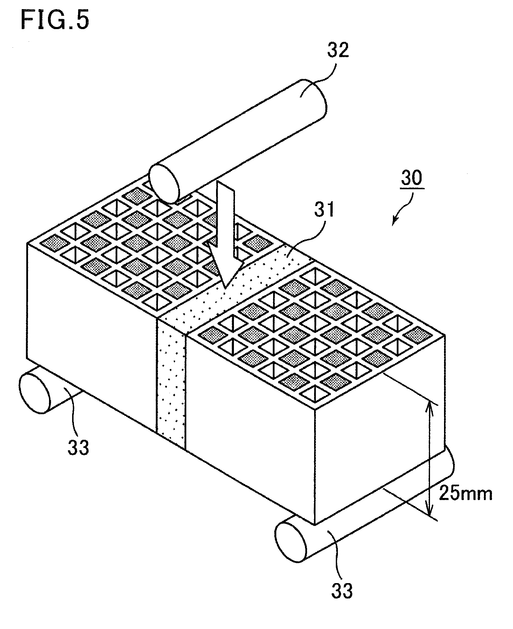

Fig. 5 is a schematic explanatory view showing the method for testing the bending strength of an adhesive layer of each honeycomb structured body (honeycomb filter) according to the example and the comparative examples.
Each honeycomb structured body manufactured in the example and the comparative examples was heat treated at 700°C for two hours under air atmosphere.
The heat-treated honeycomb structured body was cut to prepare a sample 30, in which an adhesive layer 31 was arranged in the center and each side of the adhesive layer 31 was bonded to a piece of honeycomb fired bodies 110 (length: 34.3 mm × width: 34.3 mm × thickness: 25 mm), as shown in Fig. 5.
Next, using a measuring machine (Instron 5582), a three-point bending strength test was performed in the state where the load is applied on the adhesive layer as shown in Fig. 5 under the conditions of load cell: 2 kN, speed of a crosshead 32: 0.5 mm/min, and span of a support rod 33: 57 mm, to measure the maximum load (N) when the adhesive layer was broken.
The bending strength was calculated by the following equation (1).

$$\text{Bending strength (MPa)} = 3WL/2b \times h^2 \cdots (1)$$

In the equation, W represents a maximum load (N) during loading, L represents a span width (57 mm), b represents the width of the sample (34.3 mm), and h represents the thickness of the sample (25 mm).

(Evaluation method of bending strength)

Among the obtained bending strength values, bending strength values of not less than 33 kgf were evaluated as excellent, which means that the adhesive layer had sufficiently high strength; bending strength values of not less than 30 kgf and less than 33 kgf were evaluated as good which means that the strength of the adhesive layer was not sufficiently high but was applicable; bending strength values of less than 30 kgf were evaluated as poor which means that the adhesive layer had an insufficient strength.
Table 1 shows the results.

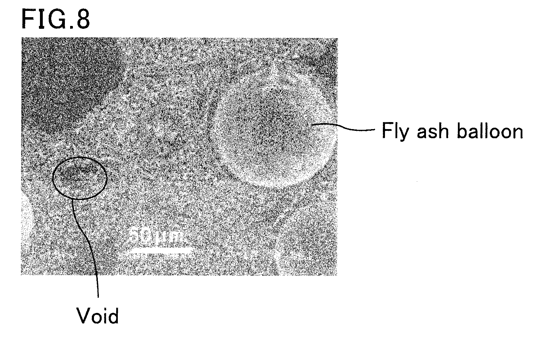

Fig. 7 and Fig. 8 are SEM photographs showing a face, which is perpendicular to the longitudinal direction of the honeycomb fired bodies, of an adhesive layer before breakage in Example 1 and Comparative Example 1, respectively. Before shooting of the photographs of Fig. 7 and Fig. 8, the voids in the adhesive layer were filled with liquid resin and the resin was cured, and then the cut surface was ground to prepare a sample for SEM.

(2) Measurement of the amount of PM (number of PM) leaking after regenerating process

The number of PM leaking after the regenerating process was measured using the following PM leakage amount measurement device.
The PM leakage amount measurement device includes a 2-L (litter) common-rail diesel engine, an exhaust gas tube for passing through exhaust gas from the engine, a metal casing which is connected to the exhaust gas tube and in which a honeycomb filter is fixed with a holding sealing material, and a PM counting device (MEXA-100SPCS, manufactured by HORIBA) which can accumulatively count the number of PM passed through the honeycomb filter for a certain period of time.

Each honeycomb structured body (honeycomb filter) of the example and the comparative examples was subjected to PM collecting and then to a regenerating process according to the following procedure.

First, each honeycomb filter manufactured in the example and the comparative examples was placed in an exhaust passage of the engine. Then, a catalyst support (diameter: 200 mm, length: 100 mm, cell density: 400 cells/inch$^2$, amount of platinum supported: 5 g/L), which is a honeycomb structured body made of commercially available cordierite, was mounted at the position nearer to the gas inlet side than the honeycomb filter to provide an exhaust gas purifying device.

Subsequently, the engine was operated under the conditions of rotation speed of engine: 1500 min$^{-1}$, torque: 50 Nm, and thereby exhaust gas was passed through the honeycomb filter. Next, the operating conditions were changed to rotation speed of engine: 2000 min$^{-1}$, torque: 90 Nm, and the engine was operated until the engine went stable, and thereby the honeycomb filter was allowed to collect 21 g/L of PM, which was a larger amount than a usual collecting amount.

Then, post injection was continued until the temperature at the exhaust gas inlet side of the honeycomb filter reached about 550°C to increase the pressure difference between the front and the rear of the honeycomb filter, whereby PM was combusted.

Then, the increased pressure difference between the front and the rear of the honeycomb filter was reduced due to PM combustion. At 10 seconds from the reduction, the driving condition was returned to idling.

Subsequently, the engine was operated in a usual mode at a rotation speed of engine of 1500 min$^{-1}$ and a torque of 50 Nm, and thereby the number of PM (#/km) leaking from the honeycomb filter was measured using the PM counting device.

The number of PM indicates the number of PM leaking from the honeycomb filter at the point where the vehicle is assumed to have driven 1 km by operating the engine.

(Evaluation method of PM leakage)

The numbers of leaking PM of not more than $1.0 \times 10^{12}$ were evaluated as good in Table 1, which means that the leakage amount was small and the filter performance was good. The numbers of leaking PM of not less than $1.0 \times 10^{12}$ were evaluated as unacceptable in Table 1, which means that the leakage amount was large and the filter performance was insufficient.

Table 1 shows the results.

[Table 1]

| | Adhesive layer | | | | | | Characteristics of honeycomb structured body | |
|---|---|---|---|---|---|---|---|---|
| | Alumina fibers | | Fly ash balloons | | Solidified product of silica sol | Silicon carbide powder | | |
| | Average length ($\mu$m) | Amount (vol%) | Average particle size ($\mu$m) | Amount (vol%) | Amount (vol%) | Amount (vol%) | Soot leakage | Strength |
| Example 1 | 60 | 10.2 | 175 | 40.9 | 12.3 | 36.6 | Good | Excellent |
| Comparative Example 1 | 60 | 10.2 | 80 | 40.9 | 12.3 | 36.6 | Unacceptable | Poor |
| Comparative Example 2 | 60 | 10.2 | 300 | 40.9 | 12.3 | 36.6 | Unacceptable | Good |

As shown in the measurement results of the bending strength of an adhesive layer in the honeycomb structured body (honeycomb filter) according to Example 1 and the measurement results of the collecting efficiency of the PM before and after the regenerating process, the honeycomb structured body according to the example, which includes adhesive layers that contain alumina fibers having an average length within a predetermined range and fly ash balloons having an average particle size within a predetermined range, could maintain the strength even after a heat shock caused by regenerating process after excessive collecting.

Additionally, as shown in the SEM photograph in Fig. 7 showing the state before breakage, the adhesive layer of Example 1 had few voids and a dense layer. The large circles in the figure are fly ash balloons. Thus, even after being exposed to temperatures not lower than 1200°C, cracks do not expand entirely, and thus the leakage amount of particulate matter such as soot is presumably controlled to be not higher than the regulation value.

In contrast, as clarified in the cases of Comparative Examples 1 and 2, when a honeycomb structured body, which includes adhesive layers containing fly ash balloons with an average particle size not falling within the range of claim 1, is given a heat impact, the bending strength is reduced, soot leakage occurs, and large cracks are formed if the adhesive layers are exposed to temperatures not lower than 1200°C.

As shown in the SEM photograph in Fig. 8, showing an adhesive layer before breakage, the adhesive layer of Comparative Example 1 had some voids and the layer density was reduced.

(Other embodiments)

In the honeycomb structured body of the present invention, the ends of cells may not be sealed. Such a honeycomb structured body can be suitably used as a catalyst support.

The shape of the honeycomb fired body is not particularly limited, and is preferably a shape easily being bonded when the honeycomb fired bodies are bonded with one another to prepare a honeycomb structured body. Examples of the cross section include square, rectangle, hexagon, and sector.

The shape of the honeycomb structured body of the present invention is not limited to round pillar shapes, and may be any shape such as cylindroid and rectangular pillar shapes.

The wet mixture, which is a raw material of the honeycomb molded body, may contain an organic binder, a plasticizer, a lubricant, a dispersion solution, and the like in addition to ceramic powder as a main component of the honeycomb structured body.

The organic binder is not particularly limited and examples thereof include methylcellulose, carboxymethylcellulose, hydroxyethylcellulose, and polyethylene glycol. Methylcellulose is preferred among these. Typically, the amount of the organic binder is preferably 1 to 10 parts by weight for each 100 parts by weight of the ceramic powder.

The plasticizer is not particularly limited and examples thereof include glycerin. The lubricant is not particularly limited and examples thereof include polyoxyalkylene compounds such as polyoxyethylene alkylether and polyoxypropylene alkylether.

The plasticizer and the lubricant may not be contained in mixed raw material powder if not needed.

Examples of the dispersion solution include water and organic solvents such as benzene, and alcohols such as methanol.

The wet mixture may further contain a molding aid.

The molding aid is not particularly limited and examples thereof include ethylene glycol, dextrin, fatty acids, fatty acid soap, and polyalcohols.

Furthermore, the wet mixture may optionally contain pore-forming agents such as balloons which are hollow microspheres and made from an oxide ceramic component, spherical acrylic particles, and graphite.

The balloons are not particularly limited and examples thereof include alumina balloons, glass microballoons, shirasu balloons, fly ash balloons (FA balloons), and mullite balloons. Alumina balloons are preferred among these.

The plug paste for sealing cells is not particularly limited and a plug paste that allows the porosity of the resulting plug manufactured through the later processes to be 30 to 75% is preferred. For example, the same paste as that for the wet mixture may be used.

The honeycomb structured body may support a catalyst for purifying exhaust gas. The catalyst to be supported is preferably a noble metal such as platinum, palladium, or rhodium, more preferably platinum. Other examples of the catalyst include alkali metals such as potassium and sodium, and alkaline-earth metal such as barium. These catalysts may be used alone or in combination of two or more thereof.

The method for manufacturing the honeycomb structured body of the present invention may be a method of preparing a plurality of honeycomb aggregate bodies, forming adhesive paste layers (adhesive paste layers including a foaming material) on side faces of the honeycomb aggregate bodies, and bonding the plurality of honeycomb aggregate bodies one another in a bonding process.

REFERENCE SIGNS LIST

20, 110: honeycomb fired body
21, 111: cell
24, 112: plug
22, 113: cell wall
30: sample
31: adhesive layer
32: crosshead
33: support rod
100: honeycomb structured body
101: adhesive layer
102: coat layer
103: ceramic block
110a, 110b: side face
120: honeycomb filter
130: adhesive paste layer
200: exhaust gas purifying device
220: metal casing
221: gas inlet side
222: gas outlet side
230: holding sealing material

**Claims**

1. A honeycomb structured body comprising:

   a plurality of pillar-shaped honeycomb fired bodies bonded with one another by adhesive layers residing therebetween,
   the plurality of pillar-shaped honeycomb fired bodies each comprising a large number of cells longitudinally disposed in parallel with one another with a cell wall being interposed therebetween,
   either one end of the cell wall that surrounds the cells being sealed,
   wherein the adhesive layers comprise at least alumina fibers and inorganic balloons,
   the alumina fibers have an average length of 25 to 100 $\mu$m, and
   the inorganic balloons have an average particle size of 150 to 250 $\mu$m.

2. The honeycomb structured body according to claim 1,
   wherein the alumina fibers have an aspect ratio (fiber length/fiber diameter) of 3 to 30.

3. The honeycomb structured body according to claim 1 or 2,
   wherein the adhesive layers further contain inorganic particles and an inorganic binder.

4. The honeycomb structured body according to any one of claims 1 to 3,
   wherein the amount of the inorganic balloons is 5.0 to 50.0 vol%.

5. The honeycomb structured body according to any one of claims 1 to 4,
   wherein the amount of the alumina fibers is 5.0 to 50.0 vol%.

6. The honeycomb structured body according to any one of claims 1 to 5,
   wherein the inorganic balloons are fly ash balloons.

7. The honeycomb structured body according to any one of claims 1 to 6,
   wherein the inorganic particles are silicon carbide particles.

8. The honeycomb structured body according to any one of claims 1 to 7,

wherein the inorganic binder is a solidified product of silica sol or alumina sol.

9. An exhaust gas purifying honeycomb filter disposed in an exhaust passage of an internal combustion engine and configured to filter particulate matter discharged from the internal combustion engine,
the honeycomb filter comprising the honeycomb structured body according to any one of claims 1 to 8.

10. An exhaust gas purifying device comprising:

a casing;
an exhaust gas purifying honeycomb filter accommodated in the casing; and
a holding sealing material wound around the exhaust gas treating body and disposed between the exhaust gas treating body and the casing,
wherein the exhaust gas purifying honeycomb filter comprises the exhaust gas purifying honeycomb filter according to claim 9.

FIG.1

100

102

101

110

103

## FIG.2

(a)

(b)

A-A line cross-sectional view

FIG.3

FIG.4

FIG.5

32

30

31

33

25mm

33

## FIG.6

## FIG.7

Fly ash balloon

50μm

FIG.8

Fly ash balloon

Void

## INTERNATIONAL SEARCH REPORT

International application No.

PCT/JP2012/058468

### A. CLASSIFICATION OF SUBJECT MATTER
*C04B37/00*(2006.01)i, *B01D39/20*(2006.01)i, *B01J35/04*(2006.01)i

According to International Patent Classification (IPC) or to both national classification and IPC

### B. FIELDS SEARCHED

Minimum documentation searched (classification system followed by classification symbols)
C04B37/00, B01D39/20, B01J35/04

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho    1971-2012   Toroku Jitsuyo Shinan Koho   1994-2012

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2008/120386 A1  (Ibiden Co., Ltd.),<br>09 October 2008 (09.10.2008),<br>claims; paragraphs [0006] to [0007], [0015],<br>[0040] to [0044], [0047]<br>& US 2008/0241444 A1    & EP 1974788 A1 | 1-10 |
| Y | JP 2007-204360 A  (Asahi Glass Co., Ltd.),<br>16 August 2007 (16.08.2007),<br>claims; paragraphs [0002], [0019], [0034]<br>& US 2007/0160825 A1    & EP 1806329 A2 | 1-10 |
| A | WO 2006/137149 A1  (Ibiden Co., Ltd.),<br>28 December 2006 (28.12.2006),<br>claims; table 1, paste A<br>& US 2006/0292044 A1    & EP 1738814 A1<br>& KR 10-2006-0135489 A   & CN 1883909 A | 1-10 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 June, 2012 (08.06.12) | 26 June, 2012 (26.06.12) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2012/058468

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2003/067041 A1  (Ibiden Co., Ltd.),<br>14 August 2003 (14.08.2003),<br>claims; page 13, line 8 to page 14, line 23;<br>examples 1, 11<br>& WO 2003/067042 A1      & EP 1479881 A1<br>& EP 1479882 A1          & US 2005/0076626 A1<br>& US 2005/0109023 A1     & CN 1628210 A<br>& EP 1719881 A2          & EP 1724448 A2<br>& EP 1726796 A1          & CN 101126335 A<br>& AT 389100 T            & DE 60319756 D<br>& AT 407285 T            & US 2008/0241015 A1<br>& DE 60323338 D | 1-10 |

Form PCT/ISA/210 (continuation of second sheet) (July 2009)

**EP 2 832 711 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03067041 A